# FASCICULE DE BREVET EUROPEEN

(11) **EP 2 337 815 B1**
(45) Date de publication et mention de la délivrance du brevet: **17.09.2014**
(21) Numéro de dépôt: 09756017.1
(22) Date de dépôt: 13.10.2009
(51) Int. Cl.: C08L 3/06, C08K 5/103, C08L 23/06, C08L 51/06, A23G 4/08, C08L 75/08

(54) **COMPOSITIONS THERMOPLASTIQUES OU ELASTOMERIQUES A BASE D'ESTERS D'UNE MATIERE AMYLACEE ET PROCEDE DE PREPARATION DE TELLES COMPOSITIONS**
THERMOPLASTISCHE ODER ELASTOMERE ZUSAMMENSETZUNGEN AUF BASIS VON ESTERN EINES STÄRKEHALTIGEN MATERIALS UND VERFAHREN ZUR HERSTELLUNG DERARTIGER ZUSAMMENSETZUNGEN
THERMOPLASTIC OR ELASTOMERIC COMPOSITIONS BASED ON ESTERS OF A STARCHY MATERIAL AND METHOD FOR PREPARING SUCH COMPOSITIONS

(30) Priorité: 13.10.2008 FR 0856937
(43) Date de publication de la demande: 29.06.2011
(73) Titulaire: Roquette Freres, 62136 Lestrem (FR)
(72) Inventeur: MENTINK, Léon, F-59800 Lille (FR); TRIPIER, Jacques, F-62122 Labeuvriere (FR)
(74) Mandataire: Cabinet Plasseraud
(86) Numéro de dépôt international: PCT/FR2009/051951
(87) Numéro de publication internationale: WO 2010/043813

(56) Documents cités:
- EP-A- 0 282 368
- EP-A- 1 440 621
- US-A- 3 666 492
- US-A- 3 883 666
- US-A- 5 462 983
- US-A- 5 936 014
- US-A1- 2002 032 254

## Description

La présente invention concerne de nouvelles compositions thermoplastiques ou élastomériques, à base d'acétates d'une matière amylacée présentant un haut degré de substitution (DS) en esters et de polymères autres que l'amidon.

On entend par « composition thermoplastique ou élastomérique » dans la présente invention une composition qui, de manière réversible, se ramollit sous l'action de la chaleur et se durcit en se refroidissant (thermoplastique) et/ou reprend plus ou moins rapidement sa forme originelle et ses dimensions primitives après application d'une déformation sous contrainte (élastomérique). Elle présente au moins une température dite de transition vitreuse (Tg) en dessous de laquelle tout ou partie de la fraction amorphe de la composition est à l'état vitreux cassant, et au-dessus de laquelle la composition peut subir des déformations plastiques réversibles. La température de transition vitreuse ou l'une, au moins, des températures de transition vitreuse de la composition thermoplastique ou élastomérique selon la présente invention est de préférence comprise entre -120 °C et + 150°C.

Cette composition peut être en particulier thermoplastique, c'est-à-dire présenter une aptitude à être mise en forme par les procédés utilisés traditionnellement en plasturgie, tels que l'extrusion, l'injection, le moulage, le soufflage et le calandrage. Sa viscosité, mesurée à une température de 100 °C à 200°C, est généralement comprise entre 10 et 10⁶ Pa.s.

La composition selon l'invention peut être également élastomérique, c'est-à-dire présenter une grande capacité d'extensibilité et de reprise élastique comme les caoutchoucs, naturels ou synthétiques. Le comportement élastomérique de la composition peut être obtenu ou ajusté par réticulation ou vulcanisation plus ou moins poussée, après mise en forme à l'état plastique. Par «composition élastomérique » on entend également, au sens de l'invention, toute composition de type « élastomère thermoplastique », possédant à la fois des propriétés élastomériques et thermoplastiques grâce à une structure de type polymère séquencé avec des segments « souples » (température de transition vitreuse inférieure à la température ambiante) et des segments durs (température de transition vitreuse supérieure à la température ambiante).

De préférence, la composition thermoplastique ou élastomérique selon l'invention est «thermo-fusible», c'est-à-dire qu'elle peut être mise en forme sans application de forces de cisaillement importantes, c'est-à-dire par simple écoulement ou par simple pressage de la matière fondue. Sa viscosité, mesurée à une température de 100 °C à 200°C, est généralement comprise entre 10 et 10³ Pa.s.

La composition thermoplastique ou élastomérique selon l'invention présente comme caractéristiques :
a) de présenter un taux de biodégradabilité faible, c'est-à-dire inférieur à 50%, de préférence inférieur à 30%,
b) de convenir:
   - au moins 0,5 % et au plus 99,95 % en poids d'un acétate d'une matière amylacée, de degré de substitution en esters (DS) compris entre 2,5 et 3, et
   - au moins 0,05 % en poids et au plus 99,5 % en poids d'un polymère autre que l'amidon, ledit polymère étant un polymère élastomérique choisi dans le groupe constitué par les caoutchoucs naturels et leurs dérivés, les polyisobutylènes, les polyisoprènes, les copolymères butadiène-styrène (SBR), les copolymères butadiène-acrylonitrile, éventuellement hydrogénés, les copolymères acrylonitrile-styrène-acrylates (ASA), les copolymères éthylène-acrylate de méthyle (EAM), les polyuréthanes thermoplastiques (TPU) de type éthers ou esters-éthers, les polyéthylènes ou polypropylènes fonctionnalisés, notamment par des motifs silane, halogénés, acryliques ou anhydride maléique, les EDM et EPDM, les élastomères thermoplastiques dérivés de polyoléfines (TPO), les copolymères styrène-butylène-styrène (SBS) et styrène-éthylène-butylène-styrène (SEBS) fonctionnalisés, notamment par des motifs anhydride maléique et les mélanges quelconques de ces polymères.
ces pourcentages se rapportant au poids total de la composition.

Selon un premier mode de réalisation, la composition selon l'invention est en outre caractérisée en ce que :
- l'acétate de matière amylacée présente, en tant que tel, un taux de biodégradabilité inférieur à 50%, de préférence inférieur à 30%, et/ou
- le polymère autre que l'amidon présente, en tant que tel, un taux de biodégradabilité inférieur à 50%, de préférence inférieur à 30%.

Selon un mode de réalisation particulièrement avantageux, la composition selon l'invention est caractérisée en ce que l'acétate de matière amylacée et le polymère autre que l'amidon présentent, chacun, un taux de biodégradabilité inférieur à 50%, de préférence inférieur à 30%.

Par « taux de biodégradabilité » au sens de la présente invention on entend le taux de biodégradation aérobie par la détermination de la demande en oxygène dans un respiromètre fermé selon la norme internationale ISO 14851 :1999.

Le protocole précis de la détermination de ce taux de biodégradabilité est décrit ci-après.

### Mesure du taux de biodégradation selon ISO 14851

Celle-ci se fait conformément à la norme internationale ISO 14851 (première édition 1999-05-15) intitulée «Evaluation de la biodégradabilité aérobie ultime des matériaux plastiques en milieu aqueux - Méthode par détermination de la demande en oxygène dans un respiromètre fermé » et ce :
- selon le principe énoncé au paragraphe 4 de ladite norme, le taux (ou niveau) de biodégradation étant déterminé en comparant la demande biologique en oxygène (DBO) avec la demande théorique en oxygène (DThO) et en l'exprimant en pourcentage,
- en calculant la DThO selon l'Annexe A de ladite nonne,
- en mettant en oeuvre un environnement d'essai, des réactifs, un appareillage et un mode opératoire conformes, respectivement, aux paragraphes 5, 6, 7 et 8 de ladite norme,
- en calculant, exprimant et validant les résultats conformément aux paragraphes 9 et 10 de ladite nonne.

Dans le cas présent, on a notamment utilisé :
- un inoculum sous forme de boue activée,
- un milieu d'essai normal,
- un environnement d'essai dans l'obscurité à 25 °C avec une précision de plus ou moins 1°C,
- de la poudre de cellulose microcristalline comme matériau de référence.

Selon une variante, la composition selon l'invention présente un taux de biodégradabilité tel que défini ci-avant qui est extrêmement faible, à savoir inférieur à 20%, notamment inférieur à 15 %, voire inférieur à 10% ou même 5%.

Selon une autre variante, la composition selon l'invention présente un taux de biodégradabilité qui reste faible mais se situe dans des gammes de valeurs plus élevées que celles précitées, à savoir un taux de biodégradabilité au moins égal à 20% et inférieur à 30%, notamment compris entre 20 et 28%.

Dans le contexte actuel de perturbations climatiques dues à l'effet de serre et au réchauffement planétaire, de l'évolution à la hausse des coûts des matières premières fossiles, en particulier du pétrole dont sont issues les matières plastiques, de l'état de l'opinion publique en quête d'un développement durable, de produits plus naturels, plus propres, plus sains et moins dispendieux en énergie, et de l'évolution des réglementations et des fiscalités, il est nécessaire de disposer de nouvelles compositions issues de ressources renouvelables, qui conviennent en particulier aux domaines des matériaux plastiques et des élastomères, et qui soient à la fois compétitives, conçues dès l'origine pour n'avoir que peu ou pas d'impacts négatifs sur l'environnement, et techniquement aussi performantes que les polymères préparés à partir de matières premières d'origine fossiles.

L'amidon constitue une matière première présentant les avantages d'être renouvelable et disponible en grandes quantités à un prix économiquement intéressant par rapport au pétrole et au gaz, utilisés comme matières premières pour les plastiques actuels.

L'amidon est déjà exploité dans la fabrication de matières plastiques, notamment en raison de sa propriété d'être aussi un produit biodégradable.

Les premières compositions à base d'amidon ont été développées il y a une trentaine d'années environ. Les amidons ont été alors employés sous forme de mélanges mécaniques avec des polymères synthétiques tels que le polyéthylène, en tant que charge, à l'état natif granulaire et non modifié, c'est-à-dire dans son état présent dans la nature.

Par la suite, l'amidon a été utilisé dans la fabrication d'objets biodégradables, mais dans un état rendu essentiellement amorphe et thermoplastique. Cet état, déstructuré, à cristallinité réduite ou absente, est obtenu par plastification de l'amidon natif granulaire par incorporation d'un plastifiant approprié à un taux compris généralement entre 15 et 25 % par rapport à l'amidon granulaire, par apport d'énergie mécanique et thermique.

Toutefois, les propriétés mécaniques des amidons thermoplastiques, bien qu'elles puissent être dans une certaine mesure modulées par le choix de l'amidon, du plastifiant et du taux d'emploi de ce dernier, sont globalement assez médiocres car les matières ainsi obtenues sont toujours très hautement visqueuses, même à haute température (120°C à 170°C) et très fragiles, trop cassantes, très dures et peu filmogènes à basse température, c'est-à-dire en dessous de la température de transition vitreuse.

De ce fait, de nombreuses recherches ont été menées pour mettre au point des formulations biodégradables ou hydrosolubles présentant de meilleures propriétés mécaniques par mélange physique de ces amidons thermoplastiques, soit avec des polymères d'origine pétrolière biodégradables (polycaprolactones ou PCL, co-polyesters aromatiques ou PBAT ou polyesters aliphatiques ou PBS) ou hydrosolubles (polyvinylalcools ou PVOH), soit avec des polyesters d'origine renouvelable comme les polylactates (PLA), les polyhydroxyalkanoates microbiens(PHA) ou soit encore des dérivés de cellulose.

La tenue à l'eau de ces compositions biodégradables ou qui plus est, des compositions hydrosolubles est généralement mauvaise et insuffisante pour entrevoir la possibilité de fabriquer des objets et produits finis de durées de vie longues ou moyennes telles que des pièces automobiles par exemple. De plus, la stabilité physico-chimique de ces compositions est dans ce cas aussi un facteur très limitant des possibilités d'usage.

Après avoir étudié en détail le problème, la Demanderesse a constaté de façon surprenante qu'il était possible de préparer des compositions thermoplastiques ou élastomériques de faible ou de très faible biodégradabilité mais aussi de grande stabilité à l'eau et dans le temps, pouvant être utiles à la production d'objets de longues durée de vie ou nécessitant d'être stables en milieux aqueux ou biologiques, en utilisant des acétates d'une matière amylacée présentant un haut à un très haut degré de substitution en esters (DS), et cela même en les combinant à des polymères connus pour être hautement biodégradables.

La présente invention apporte une solution efficace aux problèmes énoncés ci-dessus en proposant de nouvelles compositions à base d'acétate de matière amylacée, présentant en outre des propriétés améliorées par rapport à celles de l'art antérieur.

Quelle que soit la variante envisagée ci-avant, la composition thermoplastique ou élastomériques selon l'invention comprend avantageusement un acétate de matière amylacée présentant un DS élevé ou très élevé. Le DS peut être compris entre 2,5 et 2,9, l'idéal étant de retenir un DS compris entre 2,6 et 2,8.

Quelle que soit la variante envisagée, la composition thermoplastique ou élastomérique selon l'invention comprend avantageusement :
- de 5 à 99 % en poids d'un acétate d'une matière amylacée tel que décrit ci-avant, et
- de 1 à 95 % en poids du polymère autre que l'amidon
ces pourcentages se rapportant au poids total de la composition.

Selon une autre variante, la composition thermoplastique ou élastomérique selon l'invention comprend avantageusement :
- de 10 à 70 % en poids, de préférence de 10 à 60 % en poids, de l'acétate d'une matière amylacée, et
- de 30 à 90 % en poids, de préférence de 40 à 90 % en poids, du polymère autre que l'amidon
ces pourcentages se rapportant au poids total de la composition.

Sa teneur en acétate d'une matière amylacée peut notamment être comprise entre 10 et 55 %.

Sa teneur en polymère autre que l'amidon peut notamment être comprise entre 45 et 90 %, en particulier entre 45 et 85 %.

Selon une autre variante, l'acétate d'une matière amylacée est le composant principal, voire majoritaire de la composition selon l'invention, laquelle peut être alors notamment caractérisée en ce qu'elle comprend de 50 à 99 % en poids, de préférence de 51 à 98 % en poids, dudit acétate

Parallèlement, le polymère autre que l'amidon (ou «polymère non amylacé ») est alors ni le composant principal ni le composant majoritaire de la composition selon l'invention, laquelle peut être alors notamment caractérisée en ce qu'elle comprend de 1 à 49 % en poids, de préférence de 2 à 40 % en poids et plus préférentiellement encore de 2 à 35 % en poids, dudit polymère.

Selon une autre variante, l'acétate d'une matière amylacée n'est pas le composant majoritaire et généralement pas le composant principal de la composition selon l'invention, laquelle peut être alors notamment caractérisée en ce qu'elle comprend au plus 49,5 % et notamment de 5 à 49 %, de préférence de 7 à 49 % en poids et plus préférentiellement encore de 10 à 49 % en poids, dudit acétate.

Parallèlement, le polymère autre que l'amidon peut alors être le composant principal, voire le composant majoritaire de la composition selon l'invention, laquelle peut être alors notamment caractérisée en ce qu'elle comprend au moins 40 % et jusqu'à 95%, en poids, dudit polymère et notamment de 50 à 95 %, de préférence de 51 à 93 % en poids et plus préférentiellement encore de 51 à 90 % en poids, dudit polymère.

Quelle que soit la variante envisagée ci-avant, l'acétate de la matière amylacée de D5 compris entre 2,5 et 3 peut se présenter dans la composition conforme à l'invention, sous une forme quelconque, en particulier à l'état dispersé sous forme de fibres, ou autres particules, micrométriques ou nanométriques, dans le polymère non amylacé ou à l'état de phase, thermoplastique ou élastomérique, continue, discontinue ou co-continue, plus ou moins bien compatibilisée au polymère non amylacé.

En outre, le polymère non amylacé peut également se présenter dans la composition conforme à l'invention, sous une forme quelconque, en particulier à l'état dispersé sous forme de fibres dans l'ester de la matière amylacée ou à l'état de phase, thermoplastique ou élastomérique, continue, discontinue ou co-continue, plus ou moins bien compatibilisée à l'acétate de la matière amylacée.

A la meilleure connaissance de la demanderesse, l'usage d'esters de matière amylacée, en particulier de DS élevés ou très élevés, n'a été préconisé que pour :
- la fabrication de compositions thermoplastiques dites biodégradables contenant ou non par ailleurs au moins un polymère non amylacé connu pour être lui même biodégradable ou hydrosoluble comme par exemple a) les celluloses modifiées b) les protéines c) les polyesters biodégradables, notamment de type hydroxycarboxyliques comme décrit dans les brevets US 5,462, 983, WO 95/04108, EP 1 054 599 ou EP 1 142 911 ou les polyalkylène carbonates comme décrit dans les brevets US 5, 936, 014 ou WO 98/07782 et d) les polymères hydrosolubles tels que ceux décrits dans les brevets EP 638 609, US 5,936,014, US 2002/0032254 ou WO 00/73380, ou
- la fabrication de compositions élastomériques utilisables comme gommes de base pour chewing-gums dépourvues a) de tout polymère non amylacé, qu'il soit thermoplastique ou élastomérique, et b) de tout plastifiant de l'ester de matière amylacée, comme décrit par exemple dans les brevets US 3,666,492, US 4,035,572 On peut également citer le document EP 1440621 qui décrit des compositions de gomme base pour chewing-gums qui contiennent des éthers d'amidon utiles comme agents de gonflement. US 4,041,179 ou US 3,883,666.

On entend dans le cadre de la présente invention par « matière amylacée », tout oligomère ou polymère de motifs D-glucose liés entre eux par des liaisons alpha-1,4 et éventuellement d'autres liaisons, de type alpha-1,6, alpha-1,2, alpha-1,3 ou autres.

Cette matière amylacée peut provenir de tous types d'amidon et en particulier être choisi parmi les amidons de céréales telles que le blé, le maïs, l'orge, le triticale, le sorgo ou le riz ; les fécules de tubercules tels que la pomme de terre ou le manioc ; les amidons de légumineuses telles le pois, le soja ou le haricot, les amidons riches en amylose, ou inversement, riches en amylopectine (« waxy ») issus de ces plantes ou les mélanges quelconques de ces amidons.

Selon l'invention, cette matière amylacée peut présenter de préférence un poids moléculaire compris entre 10³ et 10⁸ g/mol, mieux entre 5.10³ et 10⁷ g/mol, et mieux encore entre 10⁴ et 10⁶ g/mol.

Selon un premier mode de réalisation, cette matière amylacée peut résulter de l'acétylation à un degré élevé d'un amidon granulaire, éventuellement hydrolysé ou/et modifié.

On entend ici par « amidon granulaire », un amidon natif ou modifié physiquement, chimiquement ou par voie enzymatique, ayant conservé, au sein des granules d'amidon, une structure semi-cristalline similaire à celle mise en évidence dans les grains d'amidon présents naturellement dans les organes et tissus de réserve des végétaux supérieures, en particulier dans les graines de céréales ou de légumineuses, les tubercules, les racines, les bulbes, les tiges et les fruits. Cet état semi-cristallin est essentiellement dû aux macromolécules d'amylopectine, l'un des deux constituants principaux de l'amidon. A l'état natif, les grains d'amidon présentent un taux de cristallinité qui varie de 15 à 45 %, et qui dépend essentiellement de l'origine botanique de l'amidon et du traitement éventuel qu'il a subi.

L'amidon à l'état granulaire, placé sous lumière polarisée, présente une croix noire caractéristique, dite croix de Malte, typique de cet état.

Selon une variante, l'acétate de la matière amylacée provient d'amidon granulaire hydrolysé par voie acide, oxydante ou enzymatique. De tels amidons sont communément appelés amidons fluidifiés, amidons oxydés ou dextrines blanches.

Selon une autre variante, il peut provenir de l'acétylation d'un amidon ayant essentiellement conservé la structure granulaire de l'amidon natif mais modifié par voie physico-chimique, comme notamment les amidons faiblement estérifiés et/ou éthérifiés, en particulier modifiés par acétylation, hydroxypropylation, cationisation, réticulation, phosphatation, ou succinylation, ou les amidons traités en milieu aqueux à basse température (en anglais « annealing »).

L'ester de la matière amylacée peut notamment résulter de l'acétylation d'amidon granulaire hydrolysé, oxydé ou modifié, en particulier de maïs, de blé, de pomme de terre ou de pois.

Selon un second mode de réalisation, la matière amylacée sélectionnée pour la préparation de compositions selon l'invention, provient de l'acétylation à haut niveau d'un amidon non granulaire, c'est-à-dire dépourvu de grains d'amidons présentant en microscopie sous lumière polarisée, une croix de Malte. Il peut s'agir alors d'un amidon hydrosoluble ou d'un amidon organomodifié, pouvant provenir aussi de toutes origines botaniques, y compris un amidon, riche en amylose ou, inversement, riche en amylopectine (waxy).

Selon une première variante, l'acétate de la matière amylacée de DS compris de 2,5 à 3 est un acétate d'amidon non granulaire hydrosoluble. On entend au sens de l'invention par « amidon hydrosoluble», toute matière amylacée présentant à 20°C et sous agitation mécanique pendant 24 heures, une fraction soluble dans de l'eau déminéralisée au moins égale à 5 % en poids.

L'amidon hydrosoluble peut avantageusement être choisi parmi les amidons prégélatinisés, les amidons extrudés, les amidons atomisés, les dextrines, les maltodextrines, les amidons fonctionnalisés ou les mélanges quelconques de ces produits, éventuellement plastifiés.

Les amidons prégélatinisés, extrudés ou atomisés peuvent être obtenus par traitement hydro-thermique de gélatinisation d'amidons natifs ou d'amidons modifiés, en particulier par cuisson vapeur, cuisson jet-cooker, cuisson sur tambour, cuisson dans des systèmes de malaxeur/extrudeur puis séchage par exemple en étuve, par air chaud sur lit fluidisé, sur tambour rotatif, par atomisation, par extrusion, par précipitation par un non-solvant, ou par lyophilisation, d'une suspension ou d'une solution amylacée. A titre d'exemple, on peut citer les produits fabriqués et commercialisés par la Demanderesse sous le nom de marque PREGEFLO^{®}.

Les dextrines peuvent être préparées à partir d'amidons natifs ou modifiés, par dextrinification en milieu acide peu hydraté. Il peut s'agir en particulier de dextrines blanches solubles ou de dextrines jaunes. A titre d'exemple, on peut citer les produits STABILYS^{®} A 053 ou TACKIDEX^{®} C 072 fabriqués et commercialisés par la Demanderesse.

Les maltodextrines peuvent être obtenues par hydrolyse acide, oxydante ou enzymatique d'amidons en milieu aqueux. Elles peuvent présenter en particulier un dextrose équivalent (DE) compris entre 0,5 et 40, de préférence entre 0,5 et 20 et mieux encore entre 0,5 et 12. De telles maltodextrines sont par exemple fabriquées et commercialisées par la Demanderesse sous l'appellation commerciale GLUCIDEX^{®}.

Les amidons fonctionnalisés peuvent s'obtenir en particulier par acétylation en phase aqueuse d'anhydride acétique, d'anhydrides mixtes, hydroxypropylation, cationisation, anionisation, phosphatation ou succinylation. Ces amidons fonctionnalisés peuvent présenter un degré de substitution compris entre 0,01 et 2,7, et mieux encore compris entre 0,05 et 1.

L'amidon hydrosoluble est de préférence un amidon hydrosoluble de maïs, de blé, de pomme de terre ou de pois ou un dérivé, hydrosoluble, de ceux ci.

Selon une seconde variante, la matière amylacée estérifiée à un DS compris entre 2,5 et 3 est un acétate d'un amidon organomodifié, de préférence organosoluble, pouvant provenir aussi de toutes origines botaniques. On entend au sens de l'invention par « amidon organomodifié », tout composant amylacé autre qu'un amidon granulaire ou un amidon hydrosoluble selon les définitions données ci-avant. De préférence, cet amidon organomodifié est quasiment amorphe, c'est-à-dire présente un taux de cristallinité en amidon inférieur à 5 %, généralement inférieur à 1% et notamment nul. Il est aussi de préférence « organosoluble », c'est-à-dire présente à 20°C, une fraction soluble dans un solvant choisi parmi l'éthanol, l'acétate d'éthyle, l'acétate de propyle, l'acétate de butyle, le carbonate de diéthyle, le carbonate de propylène, le glutarate de dimethyle, le citrate de triéthyle, les esters dibasiques, le diméthylsulfoxide (DMSO), le diméthylisosorbide, le triacétate de glycérol, le diacétate d'isosorbide, le dioléate d'isosorbide et les esters méthyliques d'huiles végétales, au moins égale à 5 % en poids. Bien entendu, l'amidon organosoluble peut être totalement soluble dans l'un ou plusieurs des solvants indiqués ci-dessus.

L'amidon organomodifié peut être préparé à partir d'amidons natifs ou modifiés tels que ceux présentés ci-avant, par estérification ou éthérification à un niveau suffisamment élevé pour le rendre essentiellement amorphe et pour lui conférer une insolubilité dans l'eau et de préférence une solubilité dans l'un des solvants organiques ci-dessus.

L'amidon organomodifié peut s'obtenir en particulier par greffage d'oligoméres de caprolactones ou de lactides, par hydroxypropylation et réticulation, par cationisation et réticulation, par anionisation, phosphatation ou succinylation et réticulation, par sililation, par télomérisation au butadiène. Ces amidons organomodifiés, de préférence organosolubles, peuvent présenter un degré de substitution (DS) compris entre 0,01 et 2,7, de préférence compris entre 0,05 et 2,0 et notamment compris entre 0,1 et 1,5.

L'amidon organomodifié est de préférence un amidon organomodifié de maïs, de blé, de pomme de terre ou de pois ou un dérivé, organomodifié, de ceux ci.

L'agent estérifiant utilisé pour la préparation de l'ester de la matière amylacée peut être un anhydride d'acide organique, un acide organique, un anhydride mixte, un chlorure d'acide organique ou un mélange quelconque de ces produits. Cet agent d'estérification peut être choisi parmi l'anhydride de cet acide et les mélanges quelconques de ces produits.

L'acétate de la matière amylacée de degré de substitution (DS) compris entre 2,5 et 3,0, de préférence compris entre 2,5 et 2,9 et idéalement compris entre 2,6 et 2,8, est de préférence un acétate d'un amidon hydrosoluble ou d'un amidon organomodifié, de préférence un acétate d'un amidon prégélatinisé, d'un amidon extrudé, d'un amidon atomisé, d'une dextrine, d'une maltodextrine, d'un amidon fonctionnalisé, d'un amidon organosoluble, ou d'un mélange quelconque de ces produits , éventuellement plastifiés.

De préférence, ledit acétate de la matière amylacée est un acétate, d'amidon, de dextrine ou de maltodextrine, pur ou en mélange. La composition selon l'invention comprend en particulier en tant qu'acétate matière amylacée, un acétate de DS compris dans l'une quelconque des gammes précitées d'amidon hydrosoluble ou orgamodifié, notamment d'amidon prégélatinisé, extrudé, atomisé, de dextrine, de maltodextrine, d'amidon fonctionnalisé ou d'amidon organosoluble.

De manière très avantageuse, l'acétate de la matière amylacée est un acétate d'amidon hydrosoluble ou organomodifié, un acétate de dextrine ou un acétate de maltodextrine.

L'acétate de la matière la matière amylacée peut être mélangé en toutes proportions à un amidon granulaire, éventuellement hydrolysé ou/et modifié, à un amidon hydrosoluble ou à un amidon organomodifié, tels que définis ci-dessus.

En ce qui concerne les conditions de l'estérification, l'homme du métier pourra facilement se référer, au regard de l'agent estérifiant employé, aux techniques et conditions décrites dans la littérature, notamment dans les brevets US 3 795 670, EP 603 837, US 5 667 803, WO 97/03120, WO 98/29455, WO 98/98/29456 et US 2008/0146792.

L'estérification peut s'obtenir en particulier par acétylation en phase solvant en milieu acide organique, en présence de l'anhydride ou d'un anhydride mixte de cet acide organique et d'un catalyseur acide.

La matière amylacée acétylée peut porter d'autres groupements, introduits par greffage par exemple d'oligomères de caprolactones ou de lactides, ou introduits par hydroxypropylation, réticulation, cationisation, anionisation, succinylation, silylation ou télomérisation.

La composition thermoplastique ou élastomérique selon l'invention comprend en outre au moins un polymère autre que l'amidon (appelé aussi « polymère non amylacé »).

Il peut s'agir d'un polymère d'origine naturelle, ou bien d'un polymère synthétique obtenu à partir de monomères d'origine fossile et/ou de monomères issus de ressources naturelles renouvelables.

Le polymère non amylacé peut être synthétique et obtenu notamment par polymérisation, polycondensation ou polyaddition.

De façon très préférentielle, le polymère non amylacé présente, en tant que tel, un taux de biodégradabilité inférieur à 50%, de préférence inférieur à 30%.

Le polymère autre que l'amidon est choisi parmi les polymères élastomériques.

De façon particulièrement avantageuse le polymère non amylacé élastomérique présente une température de transition vitreuse (Tg) comprise entre - 5 et - 120 °C, de préférence comprise entre - 10 °C et - 105 °C et plus préférentiellement comprise entre - 20 °C et - 80 °C.

Le polymère non amylacé élastomérique est choisi parmi les caoutchoucs naturels et leurs dérivés, les polyisobutylènes, les polyisoprenes, les copolymères butadiène-styrène (SBR), les copolymères butadiène-acrylonitrile, éventuellement hydrogénés (NBR et H-NBR), les copolymères acrylonitrile-styrène-acrylates (ASA), les copolymères éthylène-acrylate de méthyl (EAM), les polyuréthanes thermoplastiques (TPU) de type éthers ou esters-éthers, les polyéthylènes ou polypropylènes fonctionnalisés par exemple par des motifs silane, halogénés, acryliques ou anhydride maléique, les EDM et EPDM, les élastomères thermoplastiques dérivés de polyoléfines (TPO), les copolymères styrène-butylène-styrènes (SBS) et styrène-éthylène-butylène-styrènes (SEBS) fonctionnalisés par exemple par des motifs anhydride maléique et les mélanges quelconques de ces polymères.

De préférence, tout ou partie du polymère non amylacé élastomérique, est synthétisé à partir de monomères issus de ressources naturelle renouvelables à brève échéance comme les plantes, les microorganismes ou les gaz, notamment à partir de sucres, de glycérine, d'huiles ou de leurs dérivés tels que des alcools ou des acides, mono-, di- ou polyfonctionnels. Tout ou partie du polymère non amylacé peut en particulier être synthétisé à partir de monomères bio-sourcés tels que le bio-éthanol, le bio-éthylèneglycol, le bio-propanediol, le 1,3-propanediol biosourcé, le bio-butane-diol, l'acide lactique, l'acide succinique biosourcé, le glycérol, l'isosorbide, le sorbitol, le saccharose, les diols dérivés d'huiles végétales ou animales et les acides résiniques extraits de pin, ainsi que leurs dérivés.

En tout état de cause et comme déjà précisé, de façon très préférentielle, le polymère non amylacé présente, en tant que tel, un taux de biodégradabilité inférieur à 50%, de préférence inférieur à 30%.

Selon une autre variante avantageuse, le polymère non amylacé présente une faible solubilité dans l'eau, à savoir inférieure à 10 % (moins de 10 % de matière soluble dans l'eau à 20°C) et notamment inférieure à 5 %. Il est de préférence insoluble dans l'eau (moins de 0,1 % de matière soluble dans l'eau à 20°C).

Selon une autre variante, le polymère non amylacé présente un poids moléculaire moyen en poids compris entre 8500 et 10 000 000 daltons, en particulier compris entre 15 000 et 1 000 000 daltons.

Par ailleurs, le polymère non amylacé est constitué de préférence de carbone d'origine renouvelable au sens de la norme ASTM D6852 et est avantageusement non biodégradable ou non compostable au sens des normes EN 13432, ASTM D6400 et ASTM 6868.

L'incorporation du polymère non amylacé à l'acétate de la matière amylacée dans la composition conforme à l'invention peut se faire de préférence par malaxage à chaud à une température comprise entre 35 et 300 °C, notamment comprise entre 60 et 200 °C, et mieux de 100 à 180 °C. Cette incorporation peut être réalisée par mélange thermomécanique, de façon discontinue ou de façon continue et en particulier en ligne. Dans ce cas, la durée de mélange peut être courte, de quelques secondes à quelques minutes.

Selon une variante préférée, la composition thermoplastique ou élastomérique, selon l'invention peut être plastifiée et comprendre un plastifiant.

On entend par « plastifiant » ou « agent plastifiant » toute molécule de faible masse moléculaire, c'est-à-dire ayant de préférence une masse moléculaire inférieure à 5000, qui, lorsqu'elle est incorporée à la composition selon l'invention, notamment par un traitement thermomécanique à une température généralement au moins égale à 35°C, de préférence comprise entre 35 et 300 °C, notamment entre 60°C et 260°C et mieux encore entre 65°C et 200°C, aboutit à une diminution de la température de transition vitreuse de la composition selon l'invention ou de celle de l'ester de la matière amylacée et/ou à une modification de leur cristallinité.

Lorsqu'on utilise dans la présente invention le terme « plastifié » en relation avec « matière amylacée », cela implique forcément la présence d'un agent plastifiant. La matière amylacée estérifiée peut contenir une quantité d'un ou plusieurs composés figurant dans la liste des agents plastifiants ci-dessous, qui peut englober notamment l'eau.

L'agent plastifiant peut en particulier être choisi parmi l'eau, les esters et les éthers des diols, triols et polyols que sont le glycérol, les polyglycérols, l'isosorbide, les sorbitans, le sorbitol, le mannitol, et les sirops de glucose hydrogénés, les esters d'acides organiques, l'urée et les mélanges quelconques de ces produits. L'agent plastifiant peut être en particulier choisi parmi les esters méthyliques, éthyliques ou gras d'acides organiques ou minéraux tels que les acides lactique, citrique, succinique, adipique, sébacique, phtalique, glutarique ou phosphorique ou les esters acétiques ou gras de mono-alcools, diols, triols ou polyols tels que l'éthanol, le diéthylène glycol, le glycérol ou le sorbitol. A titre d'exemple, on peut citer spécifiquement le diacétate de glycérol (diacétine), le triacétate de glycérol (triacétine), le diacétate d'isosorbide, le dioctanoate d'isosorbide, le dioléate d'isosorbide, le dilaurate d'isosorbide, les esters d'acides dicarboxyliques ou esters dibasiques (« Dibasic esters » ou « DBE ») et les mélanges quelconques de ces produits. L'agent plastifiant peut également être une huile végétale époxydée, un glycol ou dérivé comme un polyester d'éthylène glycol.

Le plastifiant peut également être choisi parmi les produits précités couplés entre eux par des agents de couplage tels que l'épichlorhydrine ou un isocyanate.

Selon une autre variante, l'agent plastifiant est caractérisé par son paramètre de solubilité (dit de HILDEBRAND), lequel traduit en fait la force d'attraction existante entre les molécules dudit plastifiant et de tout polymère (de nature amylacée ou non) présent dans la composition selon l'invention, et plus particulièrement la variation de densité d'énergie de cohésion du plastifiant, i.e. l'énergie nécessaire pour le vaporiser. Les unités du paramètre de solubilité sont alors exprimées à 25°C et en (J.cm⁻³)^{0,5} ou en (MPa)^{1/2} (où 1 (J.cm⁻³)^{0,5} = 1 (MPa)¹⁻²).

L'agent plastifiant éventuellement utilisé peut notamment présenter un paramètre de solubilité compris entre 15 et 28 (J.cm⁻³)^{0,5}, de préférence compris entre 17 et 25 (J.cm⁻³)^{0,5}, plus préférentiellement encore compris entre 18 et 22 (J.cm⁻³)^{0,5}. Il peut s'agir, par exemple, de triacétate de glycérol (triacétine) dont le paramètre de HILDEBRAND, calculé à partir de sa chaleur latente de vaporisation (85,74 kJ/mol) ou de sa température d'ébullition (259°C), est de 21 (J.cm⁻³)^{0,5}.

Selon une autre variante, le plastifiant éventuellement utilisé présente de façon avantageuse une masse molaire inférieure à 1500, et en particulier inférieure à 500. L'agent plastifiant a de préférence une masse molaire supérieure à 18, autrement dit il n'englobe de préférence pas l'eau. Idéalement, l'agent plastifiant présente une masse moléculaire comprise entre 150 et 450.

L'agent plastifiant peut notamment présenter simultanément comme, par exemple, la triacétine (masse molaire de 218) :
- une masse moléculaire comprise entre 150 et 450, et
- un paramètre de HILDEBRAND compris entre 18 et 22 (J.cm⁻³)^{0,5}.

Lorsque la composition amylacée contient un agent plastifiant, ledit agent plastifiant est, de préférence, présent à raison de 1 à 150 parts en poids sec, de préférence à raison de 10 à 120 parts en poids sec et en particulier à raison de 25 à 120 parts en poids sec, pour 100 parts en poids sec d'acétate de la matière amylacée.

Selon un mode de réalisation préféré, lorsque la composition selon l'invention contient un agent plastifiant, en particulier un agent plastifiant de l'acétate de la matière amylacée, ladite composition comprend de 2 à 40 % en poids, de préférence de 4 à 35 % en poids, et en particulier de 5 à 30 % en poids, dudit agent plastifiant.

De manière particulièrement avantageuse, la composition thermoplastique ou élastomérique selon l'invention peut être caractérisée en ce qu'elle comprend:
- de 10 à 60 % en poids, de l'acétate d'une matière amylacée,
- de 40 à 85 % en poids, du polymère autre que l'amidon, et
- de 5 à 30 % en poids, d'un agent plastifiant.

L'incorporation éventuelle mais préférée d'un plastifiant peut être réalisée à froid, par exemple par mélange à température ambiante à l'acétate de la matière amylacée ou bien directement lors de la préparation de la composition thermoplastique ou élastomérique conforme à l'invention, c'est-à-dire à chaud à une température de préférence comprise entre 60 et 200°C, plus préférentiellement entre 100 et 180°C, de façon discontinue, par exemple par pétrissage/malaxage, ou de façon continue, par exemple par extrusion. La durée de ce mélange peut aller de quelques secondes à quelques heures, selon le mode de mélange retenu.

Selon une autre variante, la composition selon l'invention est caractérisée en ce que la matière amylacée utilisée pour la préparation de l'acétate contenu dans la composition présente un taux de cristallinité inférieur à 15 %, de préférence inférieur à 5% et plus préférentiellement inférieur à 1%. Ce taux de cristallinité de la matière amylacée peut en particulier être mesuré par technique de diffraction rayons X comme décrit dans le brevet US 5,362,777 (colonne 9, lignes 8 à 24).

La composition selon l'invention peut comprendre aussi, un agent de liaison.

On entend par « agent de liaison » dans la présente invention, toute molécule organique porteuse d'au moins deux groupements fonctionnels, libres ou masqués, aptes à réagir avec des molécules porteuses de fonctions à hydrogène actif telles que par exemple celles de l'acétate de la matière amylacée ou le plastifiant. Cet agent de liaison peut être ajouté à la composition pour permettre la fixation, par liaisons covalentes, d'au moins une partie du plastifiant sur l'acétate de la matière amylacée et/ou sur le polymère non amylacé ajouté. Il peut être ajouté éventuellement aussi comme agent de réticulation ou de vulcanisation.

Cet agent de liaison peut alors être choisi par exemple parmi les composés porteurs d'au moins deux fonctions, libres ou masquées, identiques ou différentes, choisies parmi les fonctions isocyanate, carbamoylcaprolactame, aldéhydes, époxyde, halogéno, acide protonique, anhydride d'acide, halogénure d'acyle, oxychlorure, trimétaphosphate, alcoxysilane et des combinaisons de celles-ci.

Il peut être choisi avantageusement parmi les composés suivants:
- les diisocyanates, de préférence le méthylènediphényl-diisocyante (MDI), le toluène-diisocyanate (TDI), le naphthalène-diisocyanate (NDI), l'hexaméthylène-diisocyanate (HMDI) et la lysine-diisocyanate (LDI),
- les dicarbamoylcaprolactames, de préférence le 1-1'-carbonyl bis caprolactame,
- le glyoxal, les amidons dialdhéydes et les amidons oxydés TEMPO,
- les diépoxydes,
- les composés comportant une fonction époxyde et une fonction halogène, de préférence l'épichlorohydrine,
- les diacides organiques, de préférence l'acide succinique, l'acide adipique, l'acide glutamique, l'acide oxalique, l'acide malonique, l'acide maléique et les anhydrides correspondants,
- les oxychlorures, de préférence l'oxychlorure de phosphore,
- les trimétaphosphates, de préférence le trimétaphoshate de sodium,
- les alcoxysilanes, de préférence le tétraéthoxysilane, et
- les mélanges quelconques de ces composés.

Dans un mode préféré de l'invention, l'agent de liaison est un diisocyanate, en particulier le méthylènediphényl-diisocyanate (MDI).

Lorsque la composition contient un agent de liaison, ledit agent de liaison est, de préférence, présent à raison de 0.1 à 15 parts en poids sec, de préférence à raison de 0,2 à 9 parts en poids sec et en particulier à raison de 0,5 à 5 parts en poids sec, pour 100 parts en poids sec d'acétate de la matière amylacée.

La composition selon l'invention peut comprendre aussi un agent de compatibilisation entre l'acétate de la matière amylacée et le polymère non amylacé. Il pourra s'agir par exemple de polymères ou encore de tensio-actifs de faible taille moléculaire ou polymériques, présentant en leur sein au moins une partie relativement hydrophile et au moins une partie relativement hydrophobe. On peut citer en particulier les protéines, les copolymères blocs et les polymères synthétiques fonctionnalisés par greffage d'anhydride maléique ou autres.

La composition selon l'invention peut comprendre d'autres produits additionnels.

On peut citer en particulier, l'addition possible de charges, de fibres ou d'additifs, détaillés en particulier ci-après, qui peuvent être incorporés dans la composition thermoplastique ou élastomérique de la présente invention. Il peut s'agir de produits visant à améliorer davantage encore ses propriétés physico-chimiques, en particulier son comportement de mise en oeuvre et sa durabilité ou bien ses propriétés mécaniques, thermiques, conductrices, adhésives ou organoleptiques.

Le produit additionnel peut être un agent améliorateur ou d'ajustement des propriétés mécaniques ou thermiques choisi parmi les minéraux, les sels et les substances organiques. Il peut s'agir d'agents de nucléation tel que le talc, d'agents améliorateurs de la résistance aux chocs ou aux rayures comme le silicate de calcium, d'agents régulateurs de retrait comme le silicate de magnésium, d'agents piégeurs ou désactivateurs d'eau, d'acides, de catalyseurs, de métaux, d'oxygène, de rayons infrarouges, de rayons UV, d'agents hydrophobants comme les huiles et graisses, d'agents retardateurs de flamme et anti-feu comme les dérivés halogènés, d'agents anti-fumée, de charges de renforcement, minérales ou organiques, comme le carbonate de calcium , le talc, les fibres végétales notamment de coco, de sisal, de coton, de chanvre et de lin, les fibres de verre ou de kevlar.

Le produit additionnel peut être également un agent améliorateur ou d'ajustement des propriétés conductrices ou isolantes vis-à-vis de l'électricité ou de la chaleur, de l'étanchéité par exemple à l'air, à l'eau, aux gaz, aux solvants, aux corps gras, aux essences, aux arômes, aux parfums, choisi notamment parmi les minéraux, les sels et les substances organiques, en particulier parmi les agents de conduction ou de dissipation de la chaleur comme les poudres métalliques et les graphites.

Le produit additionnel peut être encore un agent améliorateur des propriétés organoleptiques, notamment :
- des propriétés odorantes (parfums ou agents de masquage d'odeur),
- des propriétés optiques (agents de brillance, agents de blancheur tels que le dioxyde de titane, colorants, pigments, exhausteurs de colorants, opacifiants, agents de matité tels que le carbonate de calcium, agents thermochromes, agents de phosporescence et de fluorescence, agents métallisants ou marbrants et agents anti-buée),
- des propriétés sonores (sulfate de baryum et barytes), et
- des propriétés tactiles (matières grasses).

Le produit additionnel peut être aussi un agent améliorateur ou d'ajustement des propriétés adhésives, notamment de l'adhésion vis-à-vis des matières cellulosiques comme le papier ou le bois, des matières métalliques comme l'aluminium et l'acier, des matériaux en verre ou céramiques, des matières textiles et des matières minérales, comme notamment les résines de pin, les colophanes, les copolymères d'éthylène/alcool vinylique, les amines grasses, les agents lubrifiants, les agents de démoulage, les agents antistatiques et les agents anti-blocking.

Le produit additionnel peut être un agent améliorateur de la durabilité du matériau ou un agent de contrôle de sa (bio)dégradabilité, notamment choisi parmi les agents hydrophobants ou perlants comme les huiles et graisses, les agents anticorrosion, les agents de conservation comme en particulier les acides organiques, en particulier l'acide acétique ou l'acide lactique, les agents antimicrobiens comme Ag, Cu et Zn, les catalyseurs de dégradation comme les oxo-catalyseurs et les enzymes comme les amylases.

Le produit additionnel peut être un produit nanométrique permettant de réduire considérablement la sensibilité à l'eau et à la vapeur d'eau de la composition thermoplastique ou élastomérique finale obtenue, en comparaison celles de l'état de la technique comprenant de l'amidon. Le produit nanométrique peut être ajouté aussi pour améliorer le comportement à la mise en oeuvre et à la mise en forme de la composition selon l'invention mais également ses propriétés mécaniques, thermiques, conductrices, adhésives ou organoleptiques. Avantageusement, le produit nanométrique est constitué de particules dont l'une au moins des dimensions est comprise entre 0,5 et 200 nanomètres, de préférence comprise entre 0,5 et 100 nanomètres, et plus préférentiellement encore comprise entre 1 et 50 nanomètres. Cette dimension peut notamment être comprise entre 5 et 50 nanomètres.

Le produit nanométrique peut être de toute nature chimique et éventuellement être déposé ou fixé sur un support. Il peut être choisi parmi les argiles lamellaires naturelles ou synthétiques, les nanotubes organiques, minéraux ou mixtes, les nanocristaux et nanocristallites organiques, minéraux ou mixtes, les nanobilles et nanosphères organiques, minérales ou mixtes, individualisées, en grappes ou agglomérées, et les mélanges quelconques de ces produits nanométriques. En tant qu'argiles lamellaires appelées aussi silicates/phyllosilicates de calcium ou/et de sodium, on peut citer notamment les produits connus sous les noms de montmorillonite, bentonite, saponite, sépiolite, hydrotalcite, hectorite, fluorohectorite, attapulgite, beidellite, nontronite, vermiculite, hallysite, stevensite, manasséite, pyroaurite, sjogrénite, stichtite, barbertonite, takovite, désaultelsite, motukoréaite, honéssite, mountkeithite, wermlandite et glimmer. De telles argiles lamellaires sont déjà couramment commercialisées, par exemple par la société ROCKWOOD sous les noms de marque NANOSIL et CLOISITE. On peut aussi citer les hydrotalcites, comme les produits PURAL de la société SASOL.

Les nanotubes pouvant être utilisés dans le cadre de l'invention, présentent une structure tubulaire de diamètre de l'ordre de quelques dixièmes à plusieurs dizaines de nanomètres. Certains de ces produits sont déjà commercialisés, comme les nanotubes de carbone, par exemple par la société ARKEMA sous les noms de marque GRAPHISTRENGTH et NANOSTRENGTH et la société NANOCYL sous les noms de marque NANOCYL, PLASTICYL, EPOCYL, AQUACYL, et THERMOCYL. De tels nanotubes peuvent aussi être des nanofibrilles de cellulose, de diamètre voisin de 30 nanomètres pour une longueur de quelques microns, lesquelles sont constitutives des fibres naturelles de cellulose de bois et peuvent être obtenues par séparation et purification à partir de celles-ci.

Les nanocristaux ou nanocristallites peuvent notamment s'obtenir par cristallisation, au sein même ou non de la composition thermoplastique ou élastomérique, de matières en milieu solvant très dilué, ledit solvant pouvant être constitutif de la composition conforme à l'invention. On peut citer les nanométaux tels que les nanoparticules de fer ou d'argent utiles comme agents réducteur ou antimicrobien et les nanocristaux d'oxydes connus comme agents d'amélioration de la résistance à la rayure. On peut citer aussi les talcs nanométriques de synthèse qui peuvent s'obtenir par exemple par cristallisation à partir d'une solution aqueuse. On peut citer encore à ce titre les complexes amylose/lipides de structures de type Vh(stéarique), Vbutanol, Vglycérol, Visopropanol, Vnaphtol , de 1 à 10 microns de largeur ou de longueur, pour une épaisseur d' une dizaine de nanomètres. Il peut s'agir aussi de complexes avec cyclodextrines, de caractéristiques semblables. Il peut s'agir enfin d'agents nucléants de polyoléfines aptes à cristalliser sous forme de particules nanométriques comme les dérivés de sorbitol tels que le dibenzylidène sorbitol (DBS) et ses propres dérivés alkylés.

Le produit nanométrique utilisable peut se présenter en particules élémentaires de type nanobille ou nanosphère, c'est-à-dire sous forme de pseudo-sphères de rayon compris de 1 à 500 nanomètres, sous forme individualisée, en grappe ou en agglomérats. On peut citer notamment les noirs de carbone utilisés couramment en tant que charge d'élastomères et de caoutchoucs. Ces noirs de carbone comprennent des particules primaires de taille pouvant être comprise entre environ 8 nanomètres (noirs au four) à environ 300 nanomètres (noirs thermiques) et présentent généralement des capacités d'absorption d'huile d'ordinaire comprises entre 40 et 180 cc pour 100 grammes pour des surface spécifiques STSA comprises entre 5 et 160 m2 par gramme. De tels noirs de carbone sont notamment commercialisés par les sociétés CABOT, EVONIK, SID RICHARDSON, COLUMBIAN et CONTINENTAL CARBON.

On peut citer aussi les silices hydrophiles ou hydrophobes, de précipitation ou de combustion (pyrogénées), telles que celles utilisées comme agents d'écoulement de poudres ou de charges dans les pneus dits « verts ». De telles silices sont notamment commercialisées sous forme de poudre ou de dispersions dans de l'eau, dans l'éthylène glycol ou dans des résines de type acrylate ou époxy, par les sociétés GRACE, RHODIA, EVONIK, PPG et NANORESINS AG.

On peut citer encore les carbonates de calcium nanoprécipités ou les oxydes de métaux ( dioxyde de titane, oxyde de zinc, oxyde de cérium, oxyde d'argent, oxyde de fer, oxyde de magnésium, oxyde d'aluminium...) rendus nanométriques par exemple par combustion tels les produits commercialisés par la société EVONIK sous les appellations AEOROXIDE ou AEORODISP, ou par attaque acide tels que les produits commercialisés par SASOL sous les appellations DISPERAL ou DISPAL.

On peut citer enfin les protéines précipitées ou coagulées à l'état de billes nanométriques. On peut citer enfin les polysaccharides comme les amidons mis sous forme nanosphérique tels que par exemple les nanoparticules d'amidon réticulé de taille comprise entre 50 et 150 nanomètres, vendues sous l'appellation ECOSPHERE par la société ECOSYNTHETIX ou encore les nanoparticules d'acétate d'amidon COHPOL C6N100 du VTT, ou encore des nanobilles synthétisées directement à l'état nanométrique, par exemple celles de polystyrènemaléimides de la société TOPCHIM.

L'incorporation éventuelle de tout produit additionnel peut se faire par mélange physique à froid ou à basse température mais de préférence par malaxage à chaud à une température supérieure à la température de transition vitreuse de la composition. Cette température de malaxage est avantageusement comprise entre 60 et 200°C et mieux de 100 à 180°C. Cette incorporation peut être réalisée par mélange thermomécanique, de façon discontinue ou de façon continue et en particulier en ligne. Dans ce cas, la durée de mélange peut être courte, de quelques secondes à quelques minutes.

La composition selon l'invention présente de préférence une viscosité complexe, mesurée sur rhéomètre de type PHYSICA MCR 501 ou équivalent, comprise entre 10 et 10⁶ Pa.s, pour une température comprise entre 100 et 200°C. En vue de sa mise en oeuvre par injection par exemple, sa viscosité à ces températures est située de préférence dans la partie inférieure de la gamme donnée ci-dessus et la composition est alors préférentiellement thermo-fusible au sens précisé plus haut.

Les compositions thermoplastiques ou élastomériques selon l'invention présentent également l'avantage de pouvoir être quasiment ou totalement insolubles dans l'eau, de s'hydrater difficilement et de conserver une bonne intégrité physique après immersion dans l'eau, les solutions salines, oxydantes, acides ou alcalines ou encore les milieux aqueux plus complexes comme les milieux biologiques tels que la salive, la sueur et les sucs digestifs. Contrairement aux compositions à hautes teneurs en amidon thermoplastique de l'art antérieur, la composition selon l'invention présente avantageusement des courbes contrainte/déformation caractéristiques d'un matériau ductile, et non pas d'un matériau de type fragile.

Ses propriétés mécaniques en traction peuvent notamment être évaluées selon le protocole suivant :

### Mesure des propriétés mécaniques :

On détermine les caractéristiques mécaniques en traction des différents compositions selon la norme NF T51-034 (Détermination des propriétés en traction) en utilisant un banc d'essai Lloyd Instrument LR5K, une vitesse de traction : 50 mm ou 300 mm/min et des éprouvettes normalisées de type H2.

A partir des courbes de traction (contrainte = f(allongement)), obtenues à une vitesse d'étirement de 50 ou 300 mm/min, on relève, pour chacun des alliages, l'allongement à la rupture et la contrainte maximale à la rupture correspondante.

L'allongement à la rupture, mesuré pour les compositions de la présente invention pour une vitesse d'étirement de 50 mm/min, est généralement compris entre 10 et 1 000 %. Il est généralement supérieur à 20%, de préférence supérieur à 40%, mieux encore supérieur à 60%. Cet allongement à la rupture peut avantageusement être au moins égal à 70%, notamment au moins égal à 80%. De manière remarquable, il peut même atteindre ou dépasser 100%, voire 200%, voire beaucoup plus (300 à 900%, voire 1 000 %). Selon une variante avantageuse, cet allongement à la rupture est au moins égal à 70% et inférieur à 500% et notamment compris entre 80 % et 480 %.

La contrainte maximale à la rupture des compositions de la présente invention, également mesurée à une vitesse d'étirement de 50 mm/min, est généralement comprise entre 4 et 50 MPa. Elle est généralement supérieure à 4 MPa, de préférence supérieure à 5 MPa, mieux encore supérieure à 6 MPa. De manière remarquable, elle peut même atteindre ou dépasser 7 MPa, voire 10 MPa, voire beaucoup plus (15 à 50 MPa). Selon une variante avantageuse, cette contrainte maximale à la rupture est au moins égale à 7 MPa et inférieure à 50 MPa et notamment comprise entre 10 MPa et 45 MPa.

La composition selon la présente invention peut présenter en outre l'avantage d'être constituée de matières premières essentiellement renouvelables et de pouvoir présenter, après ajustement de la formulation, les propriétés suivantes, utiles dans de multiples applications en plasturgie ou dans d'autres domaines :
- thermoplasticité, viscosité à l'état fondu et température de transition vitreuse appropriées, dans les gammes de valeur habituelles connues des polymères courants (Tg de - 120° C à + 150°C), permettant une mise en oeuvre grâce aux installations industrielles existantes et utilisées classiquement pour les polymères synthétiques habituels,
- miscibilité suffisante à une grande variété de polymères d'origine fossile ou d'origine renouvelable du marché ou en développement,
- stabilité physicochimique satisfaisante aux conditions de mise en oeuvre,
- faible sensibilité à l'eau et à la vapeur d'eau,
- performances mécaniques très nettement améliorées par rapport aux compositions thermoplastiques d'amidon de l'art antérieur (souplesse, allongement à la rupture, contrainte maximale à la rupture)
- bons effets de barrière à l'eau, à la vapeur d'eau, à l'oxygène, au gaz carbonique, aux UV, aux corps gras, aux arômes, aux essences, aux carburants,
- opacité, translucidité ou transparence modulables en fonction des usages,
- bonne imprimabilité et aptitude à être mise en peinture, notamment par des encres et peintures en phase aqueuse,
- retrait dimensionnel contrôlable,
- stabilité dans le temps très satisfaisante,
- biodégradabilité et compostabilité ajustables, et
- bonne recyclabilité.

La présente invention a également pour objet un procédé de préparation d'une composition thermoplastique ou élastomérique telle que décrite précédemment dans toutes ses variantes, ledit procédé comprenant les étapes suivantes :
(i) sélection d'au moins un acétate d'une matière amylacée de DS compris entre 2,5 et 3;
(ii) sélection d'au moins un polymère électronique autre que l'amidon, tel que défini précédemment
(iii) préparation, de préférence par mélange thermomécanique à chaud, d'une composition thermoplastique ou élastomérique.

La composition thermoplastique ou élastomérique selon l'invention peut être utilisée telle quelle ou en mélange avec des polymères synthétiques, artificiels ou d'origine naturelle. Elle peut comprendre aussi des polymères connus pour être biodégradables ou compostables au sens des normes EN 13432, ASTM D6400 et ASTM 6868, ou des matières répondant à ces normes, tels que les PLA, PCL, PBS, PBAT et PHA.

La composition selon l'invention peut notamment être non biodégradable (taux de biodégradabilité inférieur à 5%, de préférence proche de 0%) et/ou de préférence non compostable au sens des normes EN ou ASTM citées ci-dessus. Il est possible de moduler la durée de vie et la stabilité de la composition conforme à l'invention en ajustant en particulier son affinité pour l'eau, de manière à convenir aux usages attendus en tant que matériau et aux modes de valorisation envisagés en fin de vie.

La composition thermoplastique ou élastomérique conforme à la présente invention contient avantageusement au moins 15%, de préférence au moins 30%, en particulier au moins 50%, mieux encore au moins 70%, voire plus de 80%, de carbone d'origine renouvelable au sens de la norme ASTM D6852, par rapport à l'ensemble du carbone présent dans la composition. Ce carbone d'origine renouvelable est essentiellement celui constitutif de l'ester de la matière amylacée nécessairement présent dans la composition conforme à l'invention mais peut être aussi avantageusement, par un choix judicieux des constituants de la composition, celui présent dans le plastifiant éventuel ou de tout autre constituant de la composition, lorsqu'ils proviennent de ressources naturelles renouvelables comme ceux définis préférentiellement ci-dessus.

Il est en particulier envisageable d'utiliser les compositions selon l'invention, en tant que films, joints ou de produits barrière à l'oxygène, au gaz carbonique, aux arômes, aux carburants et/ou aux corps gras, seuls ou dans des structures multi-couches obtenues par co-extrusion pour le domaine de l'emballage alimentaire notamment.

Elles peuvent aussi être utilisées pour augmenter le caractère hydrophile, l'aptitude à la conduction électrique, la perméabilité à l'eau et/ou à la vapeur d'eau, ou la résistance aux solvants organiques et/ou carburants, de polymères synthétiques dans le cadre par exemple de la fabrication de membranes, de films ou d'étiquettes électroniques imprimables, de matériaux textiles, de contenants ou réservoirs, ou encore d'améliorer les propriétés adhésives de films thermofusibles, thermocollants ou de films collants sur des supports hydrophiles tels que le bois, le verre ou la peau.

Il convient de noter que le caractère relativement hydrophile de la composition thermoplastique ou élastomérique selon l'invention réduit considérablement les risques de bio-accumulation dans les tissus adipeux des organismes vivants et donc également dans la chaîne alimentaire.

Ladite composition peut se présenter sous forme pulvérulente, granulée ou en billes. Elle peut constituer en tant que telle un mélange maître ou la matrice d'un mélange maître, destiné à être dilué dans une matrice bio-sourcée ou non.

Elle peut constituer aussi une matière première plastique ou un compound utilisable directement par un équipementier ou un façonnier pour la préparation d'objets plastiques ou élastomériques.

Elle peut constituer aussi en tant que telle un adhésif, notamment de type hot-melt, ou une matrice de formulation d'un adhésif, notamment de type hot-melt.

Elle peut constituer une partie ou la totalité d'une gomme de base ou de la matrice d'une gomme base, notamment de chewing-gum ou encore d'une résine, co-résine ou nano-charge, en particulier biosourcées, utilisables dans l'industrie, notamment des caoutchoucs et élastomères dont les pneumatiques, des bitumes routiers ou autres, des encres, des vernis, des peintures, du papier et du carton, des produits tissés et non tissés.

La présente invention a d'ailleurs pour objet l'utilisation d'une composition selon l'invention, en particulier élastomérique, pour la préparation d'une gomme base de chewing-gum.

Elle a en outre pour objet une gomme de base pour chewing-gum contenant une composition selon l'invention, avantageusement en une quantité comprise entre 5 et 50 %, de préférence entre 10 à 45 % et en particulier entre 10 et 40 %.

La présente invention a également pour objet l'utilisation d'une composition selon l'invention, en particulier élastomérique, pour la préparation d'une pièce ou d'un équipement pour l'industrie des transports, en particulier l'industrie automobile, aéronautique, ferroviaire ou navale, pour l'industrie des appareils électriques, électroniques ou électro-ménagers ou pour l'industrie du sport et des loisirs.

Il peut s'agir par exemple de bandes de roulement ou carcasses de pneus, de courroies, de câbles, de tuyaux, de joints et pièces moulés, de tétines, de gants, de semelles de chaussures, de tissus enduits.

Enfin, la composition selon l'invention peut être éventuellement utilisée pour préparer des résines thermodures (duroplastes) par réticulation poussée de manière irréversible, lesdites résines perdant ainsi définitivement tout caractère thermoplastique ou élastomérique.

L'invention concerne aussi une matière plastique, une matière élastomérique ou une matière adhésive comprenant la composition de la présente invention ou un produit fini ou semi-fini obtenu à partir de celle-ci.

### Exemple 1 : préparation de compositions selon l'invention

### Préparation des compositions

On retient pour cet exemple :
- en tant qu'ester de matière amylacée, un acétate de fécule de pomme de terre présentant un DS en ester de 2,7 et ci-après désigné «ACET 1»,
- en tant que plastifiant de cet ester de matière amylacée, une composition liquide de triacétate de glycérol (triacétine),
- en tant que polymère autre que l'amidon, un polymère thermoplastique, en l'occurrence du PLA (poly(acide lactique)),
- en tant qu'autre polymère autre que l'amidon, un polymère élastomérique de type TPU polyéther commercialisé sous la dénomination ESTANE ® 58887 par la société Noveon,
- en tant qu'autre polymère autre que l'amidon, un polyéthylène basse densité (PEbd),
- en tant qu'autre polymère autre que l'amidon, un polyéthylène greffé anhydride maléique commercialisé sous la dénomination BONDYRAM® 4001 par la société Polyram,
- en tant qu'agent de liaison, du méthylène-diphényl-diisocyante (MIDI) commercialisé sous la dénomination Suprasec 1400 par la société Hunstman.

Dans un premier temps, on réalise, en plusieurs étapes, une composition contenant, en poids :
- 30% d'ester de matière amylacée ACET 1,
- 20% de triacétine, et
- 50% de PLA.

Lors de la première étape, on mélange 60 parts d'ester ACET 1 et 40 parts de triacétine dans un mélangeur type Hobart pendant 5 minutes. Après émiettage du mélange résultant, on l'introduit, par la goulotte d'alimentation principale, dans une extrudeuse monovis de type HAAKE, de diamètre (D) de 19 mm et de longueur 25 D selon le profil de température suivant, pour respectivement les 4 fourreaux : 40°C, 140°C, 130°C et 110°C et ce, à une vitesse de rotation de 80 tours /min.

Le jonc d'ester de matière amylacée ACET 1 plastifié est ensuite granulé.

On mélange ensuite, toujours dans un mélangeur type Hobart et pendant 5 minutes, ces granules d'ester ACET 1 plastifié (« ACET 1 pl ») avec le PLA et ce, dans un ratio pondéral de 50/50.

On introduit ensuite, toujours par la goulotte d'alimentation principale, le mélange ACET 1 pl / PLA résultant, dans l'extrudeuse monovis HAAKE décrite ci-avant selon le profil de température suivant, pour respectivement les 4 fourreaux : 4°C, 140°C, 130°C et 110°C et ce, à une vitesse de rotation de 40 tours /min.

Il apparaît que ce mélange est conforme à ce que l'on peut attendre d'une matière thermoplastique traditionnelle apte à être introduite, dosée et transformée dans un équipement de transformation classique telle qu'une extrudeuse.

La composition extrudée résultante (ci-après « COMP 1 »), se présente sous la forme d'un jonc de couleur crème qui est continu, étirable sous son poids et qui apparaît visuellement homogène. Au toucher, elle présente une bonne souplesse mais une réponse élastique plutôt lente de type caoutchouc non réticulé.

Elle présente les caractéristiques mécaniques en traction suivantes, mesurées conformément au protocole décrit précédemment au niveau du paragraphe « Mesure des propriétés mécaniques » et pour une vitesse d'étirement de 50 mm/min :
- allongement à la rupture : 23%,
- contrainte maximale à la rupture : 16 MPa.

Elle présente par ailleurs un taux de biodégradabilité, mesuré conformément au protocole décrit précédemment au niveau du paragraphe « Mesure du taux de biodégradation selon ISO 14851 », dont la valeur moyenne est très faible, à savoir inférieure à 15% alors que dans les mêmes conditions, la cellulose microcristalline présente un taux de biodégradabilité proche de 90%.

Les PLAs, PHAs ou autres polymères labélisés comme biodégradables, lorsque testés seuls dans ces conditions, présentent quant à eux des valeurs de taux de biodégradabilité généralement supérieures à 50%.

La composition COMP 1 décrite ci-dessus, a ensuite été mise en oeuvre au sein de compositions extrudées (« COMP 2 », « COMP 3 » et « COMP 4 »), contenant respectivement, en poids :
- COMP 2 : 100 parts de COMP 1 + 2 parts d'agent de liaison (MDI),
- COMP 3 : 50 parts de COMP 1 + 50 parts de TPU polyéther ESTANE ® 58887 + 2% de MDI,
- COMP 4 : 50 parts de COMP 1 + 45 parts de polyéthylène basse densité (PEbd) + 5 % de PE greffé anhydride maléique BONDYRAM^{®} 4001.

Elles présentent, dans les mêmes conditions de mesure que celles utilisées pour la composition COMP 1, les caractéristiques mécaniques reprises dans le tableau ci-dessous, avec, pour compositions témoin, une composition consistant uniquement en PEbd ou uniquement en copolymère acrylonitrile butadiène styrène (« ABS »).

| COMPOSITION | Allongement à la rupture | Contrainte maximale à la rupture |
|---|---|---|
| COMP 1 | 23 % | 16 MPa |
| COMP 2 | 130 % | 18 MPa |
| COMP 3 | 207 % | 17 MPa |
| COMP 4 | 112 % | 8 MPa |
| PEbd (témoin) | 250 % | 8 MPa |
| ABS (témoin) | 40 % | 32 MPa |

Ces résultats montrent globalement que les caractéristiques mécaniques à la traction de la composition COMP 1, peuvent encore être significativement améliorées par adjonction d'une faible quantité d'agent de liaison (« COMP 2 ») et/ou par mélange avec des polymères de type, respectivement, TPU polyéther (« COMP 3 ») ou polyoléfine (« COMP 4 »),

La Demanderesse a, de manière plus générale, observé que de façon remarquable :
- la composition COMP 3 selon l'invention contenant pourtant une très forte proportion de COMP 1, possédait des caractéristiques thermiques et mécaniques qui pouvaient être comparables à celles d'élastomères thermoplastiques dits « techniques » du marché tels que ceux de type TPU ou ABS.
- les compositions COMP 2 et COMP 4 contenant pourtant de très fortes proportions de COMP 1, possédaient, malgré un manque relatif d'allongement à la rupture, un comportement proche de polymères dits « de commodité » du marché type PEbd.

### Exemple 2: utilisation de compositions élastomériques conformes à l'invention dans la préparation de chewing-gums

Dans le cadre de cet exemple, on évalue la possibilité d'utiliser des compositions selon l'invention en substitution au moins partielle d'une gomme base à base de polymère synthétique employée pour la préparation de chewing-gums.

### 2.1:matières premières

On retient pour cet exemple comme principales matières premières :
- en tant qu'esters de matière amylacée, respectivement :
   °un acétate d'une maltodextrine issue d'amidon de maïs waxy (maltodextrine GLUCIDEX^{®} 2 commercialisée par la Demanderesse), ledit acétate présentant un DS en ester de 2,7 environ (ci-après désigné « ACET 2 »),
   °un acétate d'un amidon de maïs fluidifié, en l'occurrence de l'amidon CLEARGUM^{®} MB80 commercialisé par la Demanderesse, ledit acétate présentant un DS en ester de 2,5 environ (ci-après désigné « ACET 3 »),
   °un acétate de fécule de pomme de terre (DS de 0,45), greffé ensuite avec de la epsilon-caprolactone, l'ester de matière amylacée résultant présentant un DS total en esters de 2,6 environ (ci-après désigné « ACET 4 »), et
   °un acétate de fécule de pomme de terre présentant un DS en ester de 2,6 environ, ledit acétate étant en outre hydroxypropylé et ce, avec un MS (Degré de Substitution Molaire) de 0,4 environ (ci-après désigné « ACET 5 »).
- en tant que plastifiant de ces esters de matière amylacée, de la triacétine (désignée ci-aprés « PLAST 1 »).
- en tant que polymère synthétique, une composition élastomérique (gomme base) comprenant, au total, environ 52% en poids d'un mélange de polymères autres que l'amidon, mélange constitué de poly(acétate de vinyle) (PVAc), d'esters de collophane, de copolymères butadiène/styrène et de polyisobutylène, le complément à 100% étant constitué principalement de carbonate de calcium, de cire de paraffine et d'émulsifiant. Les élastomères butadiène/styrène et polyisobutylène constituent environ un tiers, c'est-à-dire 14 %, des 52 % de polymères de la gomme de base.

### 2.2:plastification des esters de matière amylacée

Dans un pétrin à bras en Z de marque Küstner chauffé à 110°C, on mélange chacun des esters de matière amylacée ACET 2 à ACET 5 avec le plastifiant PLAST 1 et ce, dans les proportions pondérales respectives suivantes :
- 70% de ACET 2 + 30% de PLAST 1,
- 60% de ACET 3 + 40% de PLAST 1,
- 60% de ACET 4 + 40% de PLAST 1,
- 60% de ACET 5 + 40% de PLAST 1.

Après 50 minutes de pétrissage, on observe :
- une très bonne homogénéité des mélanges à base des esters ACET 2 et ACET 5,
- une homogénéité moindre des mélanges à base de l'ester ACET 3 (présence de quelques points blancs après pétrissage) et de l'ester ACET 4 (présence de particules gélifiées après pétrissage),
- une bonne élasticité des mélanges, notamment celui à base de l'ester ACET 4.

### 2.3: incorporation des esters de matière amylacée lastifiés dans la gomme base

Dans le même pétrin que celui décrit ci-avant, on mélange, toujours à 110°C et pendant 30 minutes, 70% en poids de composition élastomérique (gomme base) telle que décrite précédemment avec 30% en poids, respectivement, de chacun des esters de matière amylacée plastifiés résultant du point 2.2. ci-après désignés respectivement ACET 2 pl, ACET 3 pl, ACET 4 pl et ACET 5 pl.

On observe que l'ensemble des quatre mélanges ester de matière amylacée plastifié / gomme base sont homogènes ce qui illustre une bonne compatibilité entre la matière polymérique synthétique que constitue la gomme base et chacun des acétates de matière amylacée ACET 2 pl à ACET 5 pl préalablement plastifié

### 2.4:préparation de chewing-gums à partir de gomme base associée, ou non à un ester de matière amylacée plastifié

On prépare des compositions de chewing-gum selon la formule ci-après.

### 2.4.1 : formule

| Composant | Proportion (%) |
|---|---|
| Gomme base associée ou non à un ester de matière amylacée plastifié | 35,0 |
| Sorbitol poudre | 42,45 |
| NEOSORB® P650 | |
| Xylitol poudre | 5,0 |
| XYLISORB^{®} P90 | |
| Mannitol 60 | 5,0 |
| Sirop de maltitol | 10,0 |
| LYCASIN^{®} 80/55 | |
| Arôme menthe poudre SILESIA | 0,2 |
| Arôme menthe liquide SILESIA | 1,5 |
| Menthol | 0,5 |
| Aspartame | 0,2 |

### 2.4.2 Mode opératoire

- introduire la gomme de base, associée ou non à un ester de matière amylacée plastifié, dans un pétrin à bras en Z de marque IKA (IKAVISC MKD 0,6 - MESSKNETER H60) préchauffé à 50°C. Ajouter la moitié du sorbitol poudre. Malaxer pendant 2 minutes.
- ajouter le sirop de maltitol, malaxer 2 minutes.
- ajouter le mannitol et le xylitol poudre, malaxer 2 minutes.
- ajouter l'autre moitié du sorbitol poudre et le glycérol, malaxer 2 minutes.
- ajouter l'arôme en poudre, le menthol et l'aspartame, malaxer 1 minute. vajouter l'arôme liquide, malaxer 1 minute.
- décharger le pétrin, laminer le mélange résultant en une bande de 5 mm d'épaisseur et la découper en «sticks» de 30 mm de longueur et 18 mm de largeur.

### 2.4.3 composants « gomme base » testés.

Différents composants « gomme base » GUM 1 à GUM 5 sont testés (taux d'introduction dans la formule de chewing-gum : 35% - cf supra), constitués respectivement :
- GUM 1 :100% en poids de gomme base = TEMOIN
- GUM 2 : 70% en poids de gomme base + 30% en poids d'acétate de matière amylacée plastifié ACET 2 pl,
- GUM 3 :70% gomme base / 30% ACET 3 pl,
- GUM 4 :70% gomme base / 30% ACET 4 pl, et
- GUM 5 :70% gomme base / 30% ACET 5 pl.

### 2.4.4 Mesure de la dureté des sticks

On mesure au moyen de l'appareil INSTRON 4500 (cellule de mesure : 100 Newtons ; poinçon cylindrique de 3,9 mm de diamètre ; vitesse de déplacement : 50 mm/min.), la dureté exprimée en Newtons des sticks préparés. Ceci, soit dés après leur préparation(J0) et à différentes températures (45, 35 ou 20°C) soit après, respectivement, 1, 8 et 15 jours de stockage à l'intérieur d'un emballage en aluminium lui même placé dans une enceinte climatisée (température:20°C ; humidité relative HR): 50%).

Les résultats, exprimés en Newtons, sont donnés dans le tableau ci-après :

| Gomme base | J0- 45°c | J0- 35°C | JO-20°C | J1-20°C 50%HR | J8-20°C 50%HR | J15-20°C 50%HR |
|---|---|---|---|---|---|---|
| GUM 1 = TEMOIN | 3,0 | 7,2 | 17,8 | 25,9 | 25,7 | 27,7 |
| GUM 2 | 2,4 | 4,5 | 10,9 | 16,6 | 20,5 | 20,7 |
| GUM 3 | 1,9 | 4,5 | 9,8 | 17,2 | 19,5 | 20,0 |
| GUM 4 | 1,3 | 2,7 | 7,7 | 15,1 | 18,3 | 19,9 |
| GUM 5 | 1,9 | 4,0 | 11,2 | 16,0 | 17,9 | 18,3 |

D'une manière générale, les chewing-gums dans lesquels 30% de la gomme base est substituée par un ester de matière amylacée plastifié :
- sont parfaitement homogènes mis à part ceux obtenus avec la gomme base GUM 4 pour lesquels on observe la présence résiduelle de quelques particules éparses d'ester de matière amylacée plastifié ACET 4 pl,
- sont et restent moins durs que le témoin. Ceux dont la texture INSTRON est la plus proche du témoin sont ceux préparés avec la gomme base GUM 2 contenant 30% d'ester de matière amylacée plastifié ACET 2 pl, à savoir 30% d'un acétate de GLUCIDEX^{®} 2 plastifié par de la triacétine.

Des tests organoleptiques ont montré que, globalement, la texture et le goût de ces chewings-gums sont tout à fait acceptables, ceux préparés à partir de la gomme base GUM 2 se révélant également, lors de tels tests, comme les plus proches des chewings-gums témoins dont la gomme base n'est pas associée à un ester de matière amylacée.

Les résultats de cet Exemple 2 montrent globalement que des esters de matière amylacée tels que les produits ACET 2, ACET 3, ACET 4 et ACET 5, plastifiés, peuvent tout à fait être utilisés dans la préparation de chewing-gums en substitution au moins partielle mais significative (de quelques % à au moins 30% en poids) d'une gomme base classique de nature synthétique.

### Exemple 3: Préparation d'une composition selon l'invention à base d'ester de matière amylacée plastifiée et de polymère type TPU ester

### Préparation de la composition

On retient pour cet exemple :
- en tant qu'ester de matière amylacée plastifié, l'acétate de maltodextrine ACET 2 telle que décrit dans l'Exemple 2,
- en tant que plastifiant, de l'alkyl benzylique à raison de 15 part en poids pour 100 parts en poids dudit ester,
- en tant que polymère autre que l'amidon, un polymère de type TPU ester commercialisé sous la dénomination ESTANE^{®} 58447 par la société Noveon,
- en tant qu'agent de liaison, du méthylène-diphényl-diisocyante (MIDI) commercialisé sous la dénomination Suprasec 1400 par la société Hunstman.

On réalise, dans les conditions générales de l'Exemple 1, une composition conforme à l'invention (ci-après « COMP 5 ») contenant :
- 50 parts de polymère ESTANE^{®} 58447,
- 50 parts en poids d'ester ACET 2, plastifié, et
- 1 part en poids de MDI.

Cette composition COMP 5 présente les caractéristiques mécaniques en traction suivantes, mesurées conformément au protocole décrit précédemment au niveau du paragraphe « Mesure des propriétés mécaniques » et pour une vitesse d'étirement de 50 mm/min :
- allongement à la rupture : 80%,
- contrainte maximale à la rupture : 14 MPa.

La composition COMP 5, bien que contenant une forte proportion d'ester de matière amylacée, présente un comportement proche de certaines performances de polymère de type « polystyrène choc » ou de type « EVA pour films agricoles ».

## Revendications

1. Composition thermoplastique ou élastomérique, **caractérisée en ce que** :
a) elle présente un taux de biodégradabilité selon la norme ISO 14851 inférieur à 50%, de préférence inférieur à 30%, et
b) elle contient :
- au moins 0,5% et au plus 99,95% en poids, de préférence de 1 à 99% en poids, d'un acétate d'une matière amylacée, de degré de substitution en esters (DS) compris entre 2,5 et 3, et
- au moins 0,05% en poids et au plus 99,5% en poids, de préférence de 1 à 95 % en poids, d'un polymère autre que l'amidon, ledit polymère étant un polymère élastomérique choisi dans le groupe constitué par les caoutchoucs naturels et leurs dérivés, les polyisobutylènes, les polyisoprènes, les copolymères butadiène-styrène (SBR), les copolymères butadiène-acrylonitrile, éventuellement hydrogénés, les copolymères acrylonitrile-styrène-acrylates (ASA), les copolymères éthylène-acrylate de méthyle (EAM), les polyuréthanes thermoplastiques (TPU) de type éthers ou esters-éthers, les polyéthylènes ou polypropylènes fonctionnalisés, notamment par des motifs silane, halogénés, acryliques ou anhydride maléique, les EDM et EPDM, les élastomères thermoplastiques dérivés de polyoléfines (TPO), les copolymères styrène-butylène-styrène (SBS) et styrène-éthylène-butylène-styrène (SEBS) fonctionnalisés, notamment par des motifs anhydride maléique et les mélanges quelconques de ces polymères.

2. Composition selon la revendication 1, **caractérisée en ce que** l'ester de matière amylacée présente, en tant que tel, un taux de biodégradabilité selon la norme ISO 14851, inférieur à 50%, de préférence inférieur à 30% et **en ce que** le polymère autre que l'amidon présente, en tant que tel, un taux de biodégradabilité selon la norme ISO 14851, inférieur à 50%, de préférence inférieur à 30%.

3. Composition selon l'une quelconque des revendications 1 ou 2, **caractérisée en ce que** le DS de l'ester de la matière amylacée est compris entre 2,5 et 2,9, et en particulier entre 2,6 et 2,8.

4. Composition selon l'une quelconque des revendications précédentes, **caractérisée en ce que** le polymère autre que l'amidon présente une solubilité dans l'eau, à 20 °C, inférieure à 10 %.

5. Composition selon l'une quelconque des revendications précédente, **caractérisée en ce qu'**elle comprend :
- de 10 à 70 % en poids, de préférence de 10 à 60 % en poids, de l'ester de matière amylacée, et
- de 30 à 90 % en poids, de préférence de 40 à 90 % en poids, d'un polymère autre que l'amidon.

6. Composition selon l'une quelconque des revendications 1 à 4, **caractérisée en ce qu'**elle comprend :
- de 50 à 99 % en poids, de préférence de 51 à 98 % en poids, de l'ester de matière amylacée, et
- de 1 à 49 % en poids, de préférence de 2 à 40 % en poids et plus préférentiellement encore de 2 à 35 % en poids, d'un polymère autre que l'amidon.

7. Composition selon l'une quelconque des revendications 1 à 4, **caractérisée en ce qu'**elle comprend :
- de 5 à 49 % en poids, de préférence de 7 à 49 % en poids et plus préférentiellement encore de 10 à 49 % en poids, de l'ester de matière amylacée, et
- de 50 à 95 % en poids, de préférence de 51 à 93 % en poids et plus préférentiellement encore de 51 à 90 % en poids, d'un polymère autre que l'amidon.

8. Composition selon l'une quelconque des revendications précédentes, **caractérisée en ce que** l'acétate de la matière amylacée est un acétate d'amidon granulaire, de préférence hydrolysé, oxydé ou modifié, un acétate d'un amidon hydrosoluble ou d'un amidon organomodifié, de préférence un acétate d'un amidon prégélatinisé, d'un amidon extrudé, d'un amidon atomisé, d'une dextrine, d'une maltodextrine, d'un amidon fonctionnalisé, d'un amidon organosoluble, ou d'un mélange quelconque de ces produits, éventuellement plastifiés.

9. Composition selon l'une quelconque des revendications précédentes, **caractérisée en ce que** l'acétate de la matière amylacée est un acétate d'amidon hydrosoluble ou organomodifié, un acétate de dextrine ou un acétate de maltodextrine.

10. Composition selon l'une quelconque des revendications précédente, **caractérisée en ce qu'**elle contient en outre un agent plastifiant présent à raison de 1 à 150 parts en poids sec, de préférence à raison de 10 à 120 parts en poids sec et en particulier à raison de 25 à 120 parts en poids sec, pour 100 parts en poids sec d'acétate de la matière amylacée.

11. Composition selon l'une quelconque des revendications précédentes, **caractérisée en ce qu'**elle présente :
- un allongement à la rupture au moins égal à 70 % et inférieur à 500 %, et
- une contrainte maximale à la rupture au moins égale à 7 MPa et inférieure à 50 MPa.

12. Utilisation d'une composition selon l'une quelconque des revendications précédentes comme mélange maître, matrice de mélange maître, matière première plastique, compound pour objets plastiques ou élastomériques, adhésif, notamment de type hot-melt, matrice de formulation d'un adhésif, notamment de type hot-melt, comme constituant de gomme de base ou matrice de gomme base, notamment de chewing-gum, de résine, de co-résine ou nano-charge pour caoutchoucs, élastomères, bitumes, encres, vernis, papier, carton, produits tissés et non tissés, ou pour la préparation de résines thermodures, de préférence pour la préparation d'une gomme base de chewing-gum.

13. Utilisation d'une composition selon l'une quelconque des revendications 1 à 11 pour la préparation d'une pièce ou d'un équipement pour l'industrie des transports, en particulier l'industrie automobile, aéronautique, ferroviaire ou navale, pour l'industrie des appareils électriques, électroniques ou électroménagers, ou pour l'industrie du sport et des loisirs.

## Patentansprüche

1. Thermoplast- oder Elastomer-Zusammensetzung, **dadurch gekennzeichnet, dass**:
a) sie eine biologische Abbaubarkeit gemäß der ISO-Norm 14851 von weniger als 50%, vorzugsweise weniger als 30% aufweist, und
b) sie enthält:
- mindestens 0,5 Gew.% und höchstens 99,95 Gew.%, vorzugsweise 1 bis 99 Gew.% eines Acetats eines Stärkematerials, welches einen Estersubstitutionsgrad (DS) zwischen 1,6 und 3 aufweist, und
- mindestens 0,05 Gew.% und höchstens 99,5 Gew.%, vorzugsweise 1 bis 95 Gew.% eines Polymers, das verschieden von Stärke ist, wobei das Polymer ein Elastomer-Polymer ist, ausgewählt aus der Gruppe bestehend aus natürlichen Kautschuken und deren Derivaten, Polyisobutylen, Polyisoprenen, Styrol-Butadien-Copolymerenen (SBR), Butadien-Acrylnitril-Copolymeren, die gegebenenfalls hydriert sind, Acrylnitril-Styrol-Acrylat-Copolymeren (ASA), Ethylen-Methylacrylat-Copolymeren (EMA), thermoplastischen Polyurethanen (TPU) vom Ether oder Ester-Ether Typ, funktionalisierten Polyethylenen oder Polypropylenen, beispielsweise mit Silan-, Halogen-, Acryl- oder Maleinsäureanhydrid-Gruppen, EDM und EPDM, thermoplastischen Elastomeren, die von Polyolefinen (TPO) abgeleitet sind, funktionalisierten Styrol-Butylen-Styrolen (SBS) und Styrol-Ethylen-Butylen-Styrolen (SEBS), beispielsweise mit Maleinsäureanhydrid-Gruppen und beliebigen Mischungen dieser Polymeren.

2. Zusammensetzung nach Anspruch 1, **dadurch gekennzeichnet, dass** der Ester des Stärkematerials als solcher eine biologische Abbaubarkeit gemäß der ISO-Norm 14851 von weniger als 50%, vorzugsweise weniger als 30% aufweist, und dass das Polymer, das verschieden von Stärke ist, als solches eine biologische Abbaubarkeit gemäß der ISO-Norm 14851 von weniger als 50%, vorzugsweise weniger als 30% aufweist.

3. Zusammensetzung nach einem der Ansprüche 1 oder 2, **dadurch gekennzeichnet, dass** der DS des Esters des Stärkematerials zwischen 2,5 und 2,9 und bevorzugt zwischen 2,6 und 2,8 beträgt.

4. Zusammensetzung nach einem der vorhergehenden Ansprüche, **dadurch gekennzeichnet, dass** das Polymer, welches verschieden von Stärke ist, eine Löslichkeit in Wasser bei 20 °C von weniger als 10% aufweist.

5. Zusammensetzung nach einem der vorhergehenden Ansprüche, **dadurch gekennzeichnet, dass** sie umfasst:
- 10 bis 70 Gew.%, vorzugsweise 10 bis 60 Gew.% des Esters des Stärkematerials, und
- 30 bis 90 Gew.%, vorzugsweise 40 bis 90 Gew.% eines Polymers, welches verschieden von Stärke ist.

6. Zusammensetzung nach einem der Ansprüche 1 bis 4, **dadurch gekennzeichnet, dass** sie umfasst:
- 50 bis 99 Gew.%, vorzugsweise 51 bis 98 Gew.% des Esters des Stärkematerials, und
- 1 bis 49 Gew.%, vorzugsweise 2 bis 40 Gew.%, und stärker bevorzugt 2 bis 35 Gew.% eines Polymers, welches verschieden von Stärke ist.

7. Zusammensetzung nach einem der Ansprüche 1 bis 4, **dadurch gekennzeichnet, dass** sie umfasst:
- 5 bis 49 Gew.%, vorzugsweise 7 bis 49 Gew.% und mehr bevorzugt 10 bis 49 Gew.% des Esters des Stärkematerials, und
- 50 bis 95 Gew.%, vorzugsweise 51 bis 93 Gew.%, und stärker bevorzugt 51 bis 90 Gew.% eines Polymers, welches verschieden von Stärke ist.

8. Zusammensetzung nach einem der vorhergehenden Ansprüche, **dadurch gekennzeichnet, dass** das Acetat des Stärkematerials ein Acetat von körniger Stärke, welches vorzugsweise hydrolysiert, oxidiert oder modifiziert ist, ein Acetat einer wasserlöslichen Stärke oder einer organomodifizierten Stärke, vorzugsweise ein Acetat einer vorgelatinierten Stärke, einer extrudierten Stärke, einer zerstäubten Stärke, eines Dextrins, eines Maltodextrins, einer funktionalisierten Stärke, einer organolöslichen Stärke oder einer beliebigen Mischung davon, gegebenenfalls plastifiziert, ist.

9. Zusammensetzung nach einem der vorhergehenden Ansprüche, **dadurch gekennzeichnet, dass** das Acetat des Stärkematerials ein Acetat einer wasserlöslichen oder organomodifizierten Stärke, ein Acetat von Dextrin oder ein Acetat von Maltodextrin ist.

10. Zusammensetzung nach einem der vorhergehenden Ansprüche, **dadurch gekennzeichnet, dass** sie unter anderem einen Weichmacher enthält, wobei der Weichmacher vorzugsweise in einer Menge von 1 bis 150 Trockengewichtsteilen, vorzugsweise von 10 bis 120 Trockengewichtsteilen und insbesondere von 25 bis 120 Trockengewichtsteilen pro 100 Trockengewichtsteile des Acetats des Stärkematerials enthalten ist.

11. Zusammensetzung nach einem der vorhergehenden Ansprüche, **dadurch gekennzeichnet, dass** sie aufweist:
- eine Bruchdehnung von mindestens 70% und weniger als 500%, und
- eine maximale Bruchspannung von mindestens 7 MPa und weniger als 50 MPa.

12. Verwendung einer Zusammensetzung nach einem der vorhergehenden Ansprüche als Grundmischung, Matrix einer Grundmischung, plastischer Rohstoff, Komponente für plastische oder elastomere Gegenstände, Klebstoff, insbesondere des Heißschmelztyps, Matrixformulierung eines Klebstoffs, insbesondere des Heißschmelztyps, als Bestandteil einer Gummibasismasse oder Gummibasismasse-Matrix, insbesondere Kaugummi, Harz, Co-Harz oder Nanofüllstoff für Kautschuke, Elastomere, Bitumen, Tinten, Lacke, Papier, Karton, Gewebe- und Nicht-Gewebe-Produkte oder zur Herstellung von duroplastischen Harzen, vorzugsweise zur Herstellung einer Kaugummibasismasse.

13. Verwendung einer Zusammensetzung nach einem der Ansprüche 1 bis 11 zur Herstellung eines Teils oder einer Vorrichtung für die Transportindustrie, insbesondere für die Automobil-, Flugzeug-, Schienen- oder Schiffbauindustrie, für die elektrische, elektronische oder Haushalt-Geräteindustrie oder für die Sport- und Freizeitindustrie.

## Claims

1. A thermoplastic or elastomeric composition, **characterized in that**:
a) it has a degree of biodegradability according to the ISO 14851 standard of less than 50%, preferably of less than 30%; and
b) it contains:
- at least 0.5% and at most 99.95% by weight, preferably 1 to 99% by weight, of an acetate of a starchy material, having a degree of substitution (DS) of esters between 2,5 and 3, and
- at least 0.05% by weight and at most 99.5% by weight, preferably 1 to 95% by weight, of a polymer other than starch, said polymer being an elastomeric polymer, chosen from the group consisting of natural rubbers and derivatives thereof, polyisobutylenes, polyisoprenes, butadiene-styrene copolymers (SBRs), optionally hydrogenated butadiene-acrylonitrile copolymers, acrylonitrile-styrene-acrylate copolymers (ASAs), ethylene/methyl acrylate copolymers (EAMs), thermoplastic polyurethanes (TPUs) of ether or ester-ether type, polyethylenes or polypropylenes functionalized, in particular by silane, halogenated, acrylic or maleic anhydride units, EDMs and EPDMs, thermoplastic elastomers derived from polyolefins (TPOs), styrene-butylene-styrene copolymers (SBSs) and styrene-ethylene-butylene-styrene copolymers (SEBSs) functionalized, in particular by maleic anhydride units, and any mixtures of these polymers.

2. The composition as claimed in claim 1, **characterized in that** the ester of starchy material has, as is, a degree of biodegradability according to the ISO 14851 standard of less than 50%, preferably of less than 30%and the polymer other than starch has, as is, a degree of biodegradability according to the ISO 14851 standard of less than 50%, preferably of less than 30%.

3. The composition as claimed in either of claims 1 and 2, **characterized in that** the DS of the ester of starchy material is between 2,5 and 2.9 and more preferably between 2,6 and 2,8.

4. The composition as claimed in any one of the preceding claims, **characterized in that** the polymer other than starch has a solubility in water, at 20°C, of less than 10%.

5. The composition as claimed in any one of the preceding claims, **characterized in that** it comprises:
- from 10 to 70% by weight, preferably from 10 to 60% by weight of the ester of starchy material; and
- from 30 to 90% by weight, preferably from 40 to 90% by weight of a polymer other than starch.

6. The composition as claimed in any one of claims 1 to 4, **characterized in that** it comprises:
- from 50 to 99% by weight, preferably from 51 to 98% by weight of the ester of starchy material; and
- from 1 to 49% by weight, preferably from 2 to 40% by weight and more preferably still from 2 to 35% by weight of a polymer other than starch.

7. The composition as claimed in any one of claims 1 to 4, **characterized in that** it comprises:
- from 5 to 49% by weight, preferably from 7 to 49% by weight and more preferably still from 10 to 49% by weight of the ester of starchy material, and
- from 50 to 95% by weight, preferably from 51 to 93% by weight and more preferably still from 51 to 90% by weight of a polymer other than starch.

8. The composition as claimed in any one of the preceding claims, **characterized in that** the acetate of the starchy material is an acetate of a water-soluble starch or of an organomodified starch, preferably an acetate of a pregelatinized starch, of an extruded starch, of a spray-dried starch, of a dextrin, of a maltodextrin, of a functionalized starch, of an organosoluble starch or of any mixture of these products, which are optionally plasticized.

9. The composition as claimed in any one of the preceding claims, **characterized in that** the acetate of the starchy material is an acetate of water-soluble or organomodified starch, an acetate of dextrin or an acetate of maltodextrin.

10. The composition as claimed in any one of of the preceding claims, **characterized in that** it contains a plasticizing agent, said plasticizing agent being present in an amount of 1 to 150 parts by dry weight, preferably in an amount of 10 to 120 parts by dry weight and in particular in an amount of 25 to 120 parts by dry weight, per 100 parts by dry weight of acetate of the starchy material.

11. The composition as claimed of the preceding claims, **characterized in that** it has:
- an elongation at break at least equal to 70% and less than 500%; and
- a tensile strength at least equal to 7 MPa and less than 50 MPa.

12. The use of a composition as claimed of the preceding claims as masterbatch, masterbatch matrix, plastic raw material, compound for plastic or elastomeric articles, adhesive, in particular of the hot-melt type, matrix for formulating an adhesive, in particular of the hot-melt type, as a constituent of gum base or a gum base matrix, in particular of chewing gum, of resin, of co-resin or nanofiller for rubbers, elastomers, bitumens, inks, varnishes, paper, board, woven and non-woven products, or for the preparation of thermoset resins and preferably for the preparation of a gum base for chewing gum.

13. The use of a composition as claimed in any one of claims 1 to 11, for the preparation of a part or a piece of equipment for the transport industry, in particular the automotive, aeronautical, railroad or ship building industry, for the electrical appliance, electronic appliance or electrical household appliance industry, for the sport and leisure industry.
